# EUROPÄISCHE PATENTSCHRIFT

(11) **EP 3 953 619 B1**
(45) Veröffentlichungstag und Bekanntmachung des Hinweises auf die Patenterteilung: **05.06.2024**
(21) Anmeldenummer: 19718105.0
(22) Anmeldetag: 10.04.2019
(51) Int. Cl.: F01P 7/16, F16K 5/04, F16K 31/04, F16K 31/53, F16K 37/00, F01P 7/14

(54) **DREHSCHIEBERVENTIL FÜR EIN KRAFTFAHRZEUG**
ROTARY SLIDE VALVE FOR A MOTOR VEHICLE
SOUPAPE À TIROIR ROTATIF POUR UN VÉHICULE AUTOMOBILE

(43) Veröffentlichungstag der Anmeldung: 16.02.2022
(73) Patentinhaber: Pierburg GmbH, 41460 Neuss (DE)
(72) Erfinder: TÖNNESMANN, Andres, 41460 Neuss (DE); BADEN, Matthias, 41460 Neuss (DE); BEUTLER, Richard, 41460 Neuss (DE); GISSING, Jörg, 41460 Neuss (DE); OESTERDIEKHOFF, Jens, 41460 Neuss (DE)
(74) Vertreter: terpatent Patentanwälte und European Patent Attorneys ter Smitten Eberlein -Van Hoof
(86) Internationale Anmeldenummer: PCT/EP2019/059054
(87) Internationale Veröffentlichungsnummer: WO 2020/207573

(56) Entgegenhaltungen:
- EP-A1- 0 487 554
- EP-A1- 2 182 260
- EP-A1- 3 001 078
- EP-A1- 3 306 057
- WO-A1-2015/004646
- WO-A1-2018/137952
- WO-A2-03/081003
- GB-A- 1 330 419
- JP-A- 2016 152 676

## Beschreibung

Die Erfindung betrifft eine Ventilvorrichtung für ein Kraftfahrzeug mit einem Strömungsgehäuse, welches zumindest einen Einlass und zumindest einen Auslass aufweist, einem Antriebsmotor mit einem Stator und einem Rotor, einem Getriebe, welches mittels des Antriebsmotors in Drehung versetzbar ist und über welches ein Regelkörper mit einer Abtriebswelle oder Abtriebsachse drehbar ist, auf der der Regelkörper zumindest drehfest angeordnet und über die der Regelkörper gelagert ist, über welchen eine fluidische Verbindung zwischen dem zumindest einen Einlass und dem zumindest einen Auslass regelbar ist.

Derartige Ventilvorrichtungen können beispielsweise sowohl Klappenventile als auch Drehschieberventile sein, welche beispielsweise als Kühlmittelventile in den Kühlkreisläufen von Verbrennungsmotoren oder auch in Kühlkreisläufen für Elektromotoren oder Batterien in Elektrofahrzeugen oder Hybridfahrzeugen verwendet werden. Durch Drehung des Regelkörpers gelangt entweder bei einem Drehschieberventil die Durchflussöffnung in Überdeckung mit dem Einlass und/oder dem Auslass oder eine Klappe wird von ihrem Sitz weggedreht, wodurch eine fluidische Verbindung zwischen Einlass und Auslass über den Spalt hergestellt wird, so dass das zu regelnde Medium vom Einlass zum Auslass strömen kann.

Drehschieberventile weisen entweder eine Öffnung auf, über die auch eine Regelung des Kühlmittelstromes entsprechend des Überdeckungsgrades der Durchflussöffnung zum Einlass beziehungsweise zum Auslass möglich ist oder mehrere Durchflussöffnungen auf, die mit verschiedenen Teilkreisen des Kühlkreislaufs in Verbindung gebracht werden können. Die hierzu verwendeten Drehschieberglieder weisen üblicherweise eine Zylinder-, Hohlzylinder- oder Kugelform auf, so dass sich die Durchflussöffnungen von einer Seitenfläche zur gegenüberliegenden Seitenfläche oder über einen Bereich der Mantelfläche erstrecken oder durch sektionelle Ausnehmungen am Zylinder oder der Kugel gebildet werden. Die Drehschieberglieder sind gegenüber dem umliegenden Strömungsgehäuse üblicherweise durch an den Einlässen beziehungsweise Auslässen angeordnete Dichtelemente abgedichtet, um Kurzschlussströmungen zu verhindern.

Der Antrieb der Regelkörper erfolgt üblicherweise über einen Elektromotor, der vorzugsweise als elektronisch kommutierter Motor mit am Rotor befestigten Permanentmagneten ausgeführt ist und dessen Abtrieb entweder direkt oder über ein Getriebe mit dem Regelkörper verbunden ist. Bei einem direkten Antrieb ergibt sich jedoch das Problem, dass eine feinfühlige Verstellung des Regelkörpers nicht möglich ist.

Daher wird in der DE 10 2017 105 696 A1 ein Drehschieberventil vorgeschlagen, welches ein zwischengeschaltetes Getriebe aufweist, welches als Harmonic Drive Wellgetriebe ausgeführt ist. Dabei ist ein Außenrotor des Elektromotors als Wellorgan in einer leicht elliptischen Form ausgeführt, auf dem ein flexibles Zahnrad mit einer Außenverzahnung gelagert ist, welches in eine Innenverzahnung eines Strömungsgehäuses greift. Das flexible Zahnrad ist über eine Stange mit dem Drehschieberglied verbunden, so dass dieses mit dem flexiblen Zahnrad gedreht wird. Da sich die Zähneanzahl der Innenverzahnung des Strömungsgehäuses lediglich um zwei Zähne von der Zähneanzahl des flexiblen Zahnrades unterscheidet, wird eine sehr feinfühlige Verstellung mit geringen aufzubringenden Antriebskräften des Antriebsmotors erreicht. Es wird jedoch keine Lagerückmeldung offenbart, die für eine genaue Verstellung des Drehschiebergliedes erforderlich ist.

Des Weiteren ist aus der JP 2016-152676 A ein Elektromotor bekannt, dessen Rotor eine gerade Anzahl an Polpaaren aufweist und an dessen Antriebswellenende ein Gebermagnet mit einem Polpaar ausgebildet ist, der mit einem Sensor kommuniziert, der dem Wellenende gegenüberliegt.

Des Weiteren ist aus der EP 2 182 260 A1 ein Drehschieberventil bekannt, welches über einen Elektromotor unter Zwischenschaltung eines Getriebes angetrieben wird. Die Welle des Drehschiebergliedes erstreckt sich bis vor den Rotor, wo sie mit einer Abtriebswelle des Elektromotors gekoppelt ist. Eine Lagerückmeldung wird nicht offenbart.

Zusätzlich wird in der WO 91/02893 A1 ein Drehschieberventil offenbart, dessen Antriebswelle ohne Zwischenschaltung eines Getriebes mit dem Rotor des Elektromotors verbunden ist. Die Lagerückmeldung des Drehschiebergliedes erfolgt an der motorabgewandten Seite des Drehschiebergliedes.

Auch die WO 2015/004646 A1 offenbart ein Drehschieberventil, welches über den Rotor des Elektromotors direkt angetrieben wird und auf der vom Elektromotor abgewandten Seite einen Magneten zur Lagerückmeldung am Drehschieberglied aufweist.

Des Weiteren offenbart die EP 3 306 057 A1 einen Aktuator, dessen Rotor auf einer Rotorachse gelagert ist und ein Hohlrad eines Getriebes trägt. Die Lagerückmeldung erfolgt motorseitig über einen Sensormagneten.

Nachteilig an einer solchen Ausführung ist jedoch, dass durch eine derartige Sensierung lediglich die Stellung des Rotors des Elektromotors bestimmt werden kann, so dass der Sensor lediglich zur Kommutierung des Elektromotors geeignet ist. Aufgrund der insbesondere bei Drehschieberventilen vorkommenden hohen Übersetzungen kann jedoch nicht in ausreichend genauem Maß von der Position des Rotors auf die Position des Regelkörpers geschlossen werden.

Es stellt sich daher die Aufgabe, eine Ventilvorrichtung zu schaffen, welche sehr feinfühlig und genau verstellbar ist. Hierzu soll eine die exakte Stellung des Regelkörpers aufnehmende Lagerückmeldung verwendet werden, welche möglichst keinen zusätzlichen Bauraum benötigt.

Diese Aufgabe wird durch eine Ventilvorrichtung für ein Kraftfahrzeug mit den Merkmalen des Hauptanspruchs 1 gelöst.

Dadurch, dass die Abtriebswelle oder Abtriebsachse sich vom Regelkörper durch das Getriebe zumindest in den Rotor des Antriebsmotors erstreckt, wobei ein Gebermagnet als Sensorgeber zumindest drehfest zur Abtriebswelle oder Abtriebsachse befestigt ist, der mit einem Magnetsensor zur Positionserfassung kommuniziert, wird auf einfache Weise eine Lagerückmeldung erreicht, mit der die genaue Position des Regelkörpers ermittelt werden kann, ohne dass zusätzliche Elektronik im Bereich des Regelkörpers eingebracht werden muss. Stattdessen kann der Bauraum der Elektronikeinheit, die zur Ansteuerung des Stators erforderlich ist, genutzt werden, so dass kein zusätzlicher Bauraum erforderlich ist. Die Daten des Sensors können zu einer sehr genauen und feinfühligen Einstellung des Regelkörpers genutzt werden, der zumindest drehfest mit der Abtriebswelle oder der Abtriebsachse verbunden ist. Hierzu ist der Rotor vom Stator durch einen Spalttopf getrennt, der einen Innenraum, in dem der Gebermagnet angeordnet ist, von einem Außenraum, in dem der Sensor angeordnet ist, trennt. Somit kann der gegen chemische Einflüsse unempfindliche Gebermagnet in einem mit dem zu regelnden Medium gefüllten Innenraum angeordnet werden, während sich der empfindliche Sensor in einem trockenen und vor äußeren Einflüssen geschützten Außenraum befindet. Somit wird eine exakte Lagerückmeldung mit einer langen Haltbarkeit geschaffen.

Vorzugsweise ist der Sensor auf der Mittelachse des Antriebsmotors angeordnet, wodurch sich das vom Rotor auf den Sensor wirkende magnetische Feld einfach eliminieren lässt beziehungsweise der Rotor so ausgeführt werden kann, dass sich im Bereich des Sensors die magnetischen Feldlinien immer vollständig aufheben.

In einer vorteilhaften Ausbildung ist die Abtriebsachse an einem Boden des Spalttopfes in einer zentralen Aufnahme gelagert, wobei der Sensor auf einer zur Aufnahme gegenüberliegenden Seite des Spalttopfes angeordnet ist. Es wird somit eine koaxiale Positionsermittlung trotz des zwischenliegenden Lagers ermöglicht. Trotz der Lagerückmeldung wird so der sehr einfache Aufbau des Ventils erhalten.

Vorzugsweise weist der Gebermagnet auf der dem Magnetsensor zugewandten Seite eine ungerade Polpaarzahl auf und der Antriebsmotor eine gerade magnetische Polpaarzahl auf. Auf diese Weise wirkt das magnetische Feld des Antriebsmotors nicht auf den Magnetsensor, so dass auf diesen ausschließlich das Feld des insbesondere ein Polpaar aufweisenden Permanentmagneten wirkt und ein Signal erzeugt, die ein Maß für die Drehposition des Regelkörpers darstellt.

Insbesondere ist es vorteilhaft, wenn der Antriebsmotor als zweiphasiger Klauenpolmotor ausgeführt ist. Auf Grund des größeren Luftspalts wird eine Ausführung mit nicht mehr als vier Polpaaren je Phase bevorzugt. Über eine angepasste Kommutierung, welche ähnlich einer Sinuskommutierung, jedoch phasenversetzt für die beiden Spulen der Klauenpolmaschine erfolgt, kann ein gleichmäßiger Drehmomentverlauf eingestellt werden sowie jede beliebige Rotorposition angefahren werden, so dass eine sehr exakte Einstellbarkeit der gewünschten Position des Regelkörpers mit Hilfe der Lagerückmeldung möglich ist.

Vorzugsweise ist der Gebermagnet ein axial sektorförmig magnetisierter Ringmagnet. Dieser Ringmagnet umgibt entsprechend die Abtriebsachse.

Unter axial sektorförmig magnetisiert wird in diesem Zusammenhang verstanden, dass der Magnet aus gleich großen, benachbarten, in axialer Richtung entgegengesetzt magnetisierten Sektoren besteht, also jeder Pol die Form eines halben Ringes aufweist, wobei die beiden Magnetringe so zueinander angeordnet sind, dass in Axialrichtung der Südpol des einen Magnetringes auf dem Nordpol des anderen Magnetringes aufliegt und umgekehrt. Mit einem derartigen Magneten ist auf vorteilhafte Weise ein ausreichendes Magnetfeld am ort des Sensors realisierbar und damit eine sehr genaue Lagerückmeldung möglich.

In einer weiteren bevorzugten Ausbildung ist der Gebermagnet an einem Magnetträger befestigt, der an der Abtriebsachse befestigt ist. So kann der Gebermagnet präzise ausgerichtet werden, da ansonsten eine Herstellung des Magnetringes und seine Befestigung und auf der Abtriebsachse sehr schwierig mit ausreichenden Toleranzen bezüglich des Innenradius durchgeführt werden kann. Zusätzlich wird der Magnet geschont, da er nicht auch axial durch beispielsweise Kleben auf der Abtriebsachse gehalten werden muss. Der Magnetträger kann auch stoffschlüssig durch Schweißen oder Löten an der Abtriebsachse befestigt werden, ohne dass eine Entmagnetisierung zu befürchten wäre, wie dies bei einer derartigen Befestigung des Permanentmagneten an der Abtriebsachse der Fall wäre. Entsprechend wird die Haltbarkeit der Befestigung des Permanentmagneten zur Abtriebsachse deutlich verbessert. Gleichzeitig dient der Magnetträger als axiale Anlauffläche für den Rotor, wofür das spröde Magnetmaterial nicht geeignet wäre.

Besonders vorteilhaft ist es, wenn der Sensor auf einer Platine im Außenraum des Spalttopfes angeordnet ist, auf welcher die Steuerelektronik angeordnet ist, wobei der Außenraum durch einen Deckel am axialen, zum Regelkörper gegenüberliegenden Ende der Ventilvorrichtung verschlossen ist. Dies bedeutet, dass am zum Regelkörper entgegengesetzten Ende der Ventilvorrichtung ein Elektronikraum geschaffen wird, der durch den Deckel verschließbar ist. In diesem Raum kann auf einfache Weise eine Platine befestigt werden und der Kontakt zu den Windungen des Stators hergestellt werden. Durch Anbringung des Sensors auf dieser Platine, die auch die Steuerelektronik für den Stator enthalten kann, wird entsprechend kein zusätzlicher Bauraum zur Lagerückmeldung benötigt. Stattdessen werden auch die notwendigen elektrischen Verbindungen in ihrer Länge minimiert, da die Lagerückmeldung direkt auf der Platine erfolgen kann, die auch für die Ansteuerung des Stators zuständig ist. Somit kann die komplette Elektronik ausschließlich im Elektronikraum platziert werden.

Des Weiteren ist vorzugsweise der Rotor des Antriebsmotors hohlzylindrisch ausgebildet und ist über einen Rotorträger auf der Abtriebsachse gelagert, wobei im Innern des Rotors der Gebermagnet zur Lagerückmeldung angeordnet ist. Entsprechend wird kein zusätzlicher axialer Bauraum für die Lagerückmeldung benötigt.

Zusätzlich kann der Spalttopf einstückig mit einem Aktorgehäuse ausgebildet sein, wodurch sowohl eine zusätzliche Montage entfällt als auch auf weitere Dichtungen verzichtet werden kann.

Besonders bevorzugt ist es, wenn das Getriebe ein Wolfromgetriebe ist, dessen Sonnenrad einstückig mit dem Rotorträger ausgebildet ist. Auch diese Ausführung erleichtert die Montage durch die Verringerung der Anzahl an Bauteilen. Der Rotorträger dient dann sowohl zum Tragen der Magneten des Rotors des Antriebsmotors als auch als Teil des Getriebes, so dass auch hier wenig Bauraum benötigt wird.

Vorteilhafterweise weist der Spalttopf einen sich radial erstreckenden Kragen auf, der den Innenraum, in dem der Rotor und das Wolfromgetriebe angeordnet sind, axial vom Außenraum trennt. Das offene Ende des Spalttopfes weist entsprechend zu dem Teil des Raumes, in dem sich das Getriebe befindet, so dass alle elektronischen Bauteile im Außenraum angeordnet werden können. Der Innenraum kann entsprechend vollständig durch das Strömungsgehäuse und den Spalttopf begrenzt werden, so dass lediglich der Spalttopf zum Strömungsgehäuse abgedichtet werden muss. Ein Eindringen von Fluid in den Statorbereich und den Elektronikbereich wird zuverlässig durch den Kragen vermieden.

Zur Verringerung der zu montierenden Einzelteile ist es besonders bevorzugt, wenn sich vom Kragen des Spalttopfes axial ein erstes Hohlrad des Wolfromgetriebes erstreckt, welches entsprechend als feststehendes Hohlrad des Wolfromgetriebes dient. Der Spalttopf kann in diesem Fall auch einstückig durch Spritzgießen mit dem Kragen und dem Hohlrad hergestellt werden, so dass zusätzliche Montageschritte entfallen.

Vorzugsweise ist ein zweites Hohlrad des Wolfromgetriebes drehfest zum Regelkörper ausgebildet. Insbesondere kann an einer radialen Innenseite eines als Drehschieberglied ausgebildeten Regelkörpers ein zweites Hohlrad des Wolfromgetriebes ausgebildet sein. Dieses kann entweder einstückig mit dem Regelkörper hergestellt werden oder an diesem befestigt werden. Entsprechend wird der axiale Bauraum sehr klein gehalten. Auch entfällt eine andersartige Bewegungskopplung des Hohlrades zum Regelkörper.

Des Weiteren ist es vorteilhaft, wenn das Sonnenrad des Wolfromgetriebes mit zumindest einem Planetenrad kämmt, das mit dem ersten Hohlrad und dem zweiten Hohlrad kämmt, wobei die Zähneanzahl der beiden Hohlräder unterschiedlich sind. Insbesondere unterscheidet sich die Zähneanzahl der beiden Hohlräder lediglich um wenige Zähne, was eine sehr feinfühlige Verstellung ermöglicht. Ein derartiges Wolfromgetriebe ist dennoch leicht zu fertigen und zu montieren und benötigt nur einen geringen Bauraum.

In einer besonders bevorzugten Ausführungsform ist die Ventilvorrichtung ein Drehschieberventil für einen Kühlmittelkreislauf und der Regelkörper ein Drehschieberglied. An einem derartigen Ventil sind die beschriebenen Merkmale besonders vorteilhaft einzusetzen.

Es wird somit eine Ventilvorrichtung für ein Kraftfahrzeug, insbesondere ein Drehschieberventil für einen Kühlmittel- oder Kältemittelkreislauf geschaffen, mit dem auf sehr kleinem Bauraum eine sehr feinfühlige und entsprechend genaue Positionierung möglich wird, indem eine sehr genau arbeitende Lagerückmeldung verwirklicht wird. Dabei ist die Montage durch die geringe Anzahl an Bauteilen und den einfachen Aufbau deutlich erleichtert. Insbesondere kann die gesamte Elektronikeinheit einschließlich der Ansteuerung und der Lagerückmeldung in einem gemeinsamen gut abgeschirmten Gehäusebereich angeordnet werden. Zusätzlicher Bauraum wird für die erfindungsgemäße Lagerückmeldung durch die vollständige Integration nicht benötigt. Eine modulare Bauweise von Bauformen mit und ohne Lagerückmeldung wird dadurch besonders erleichtert.

Ein Ausführungsbeispiel einer erfindungsgemäßen Ventilvorrichtung ist in den Figuren dargestellt und wird im Folgenden am Beispiel eines Drehschieberventils, welches für einen Kühlmittelkreislauf geeignet ist und dort als Regel- oder Stellventil verwendet werden kann, beschrieben.

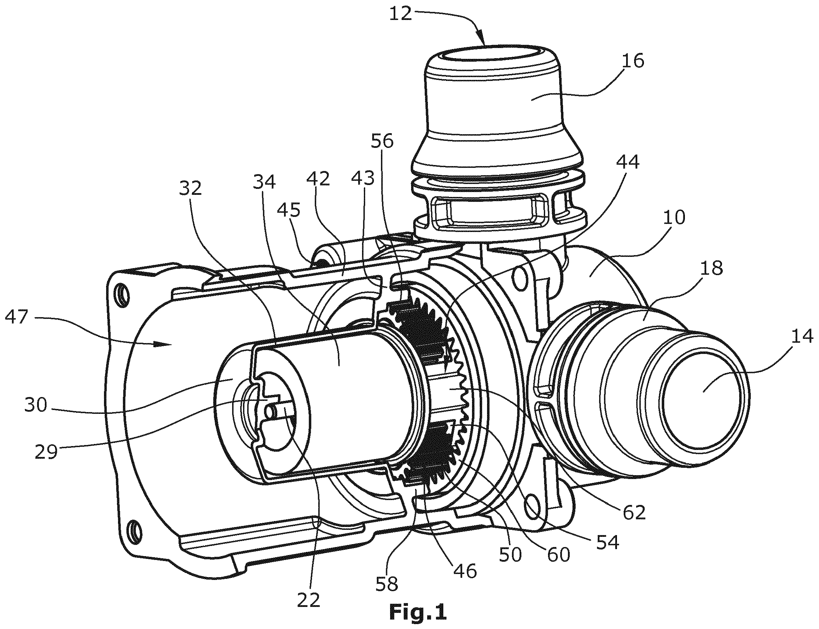

Figur 1 zeigt eine perspektivische Seitenansicht einer erfindungsgemäßen Ventilvorrichtung für ein Kraftfahrzeug in teilweise aufgeschnittener Darstellung.

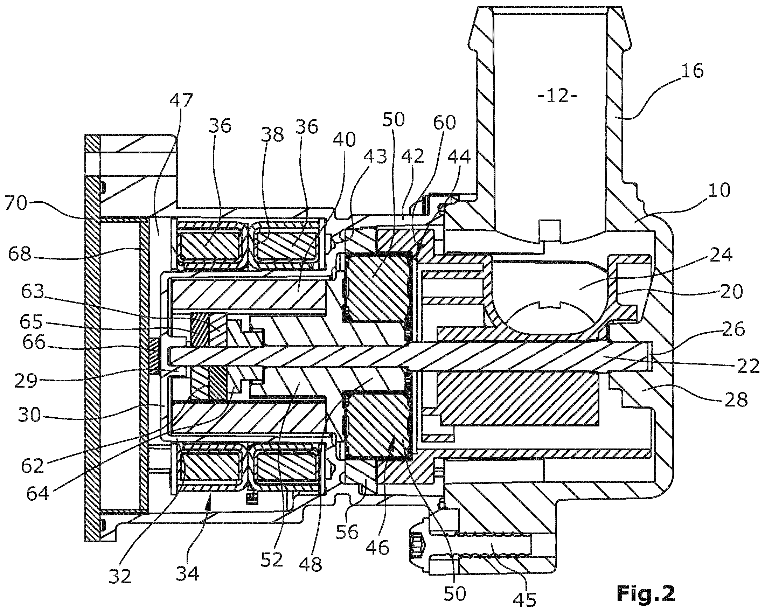

Figur 2 zeigt eine Seitenansicht der erfindungsgemäßen Ventilvorrichtung gemäß Figur 1 in geschnittener Darstellung.

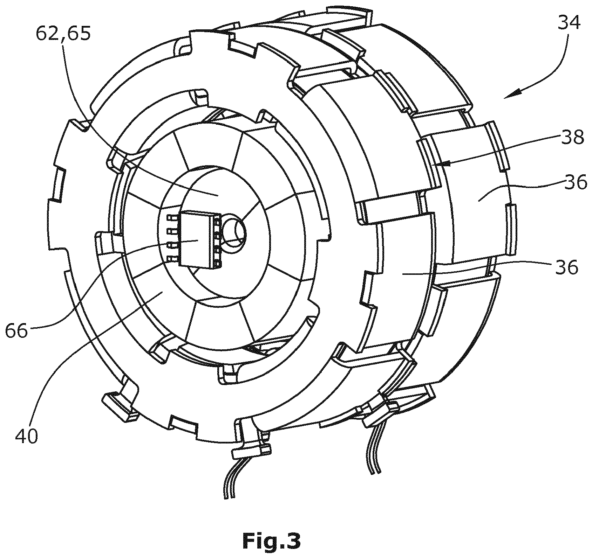

Figur 3 zeigt eine perspektivische Ansicht eines Antriebsmotors mit Lagerückmeldung für eine Ventilvorrichtung gemäß den Figuren 1 oder 2.

Die erfindungsgemäße Ventilvorrichtung weist ein Strömungsgehäuse 10 mit einem Einlass 12 und einem Auslass 14 auf, die im vorliegenden Ausführungsbeispiel in einem radial verlaufenden Einlassstutzen 16 und einem um 90° zum Einlassstutzen 16 versetzten, ebenfalls radial verlaufenden Auslassstutzen 18 ausgebildet sind. Im Strömungsgehäuse 10, welches im Wesentlichen hohlzylindrisch geformt ist, ist ein als Regelkörper 20 dienendes Drehschieberglied auf einer Abtriebsachse 22 befestigt, welches eine Durchflussöffnung 24 aufweist, über die die fluidische Verbindung zwischen dem Einlass 12 und dem Auslass 14 hergestellt werden kann. Die Durchflussöffnung 24 ist in vorliegender Ausführung lediglich als sich etwa über den halben Umfang des ansonsten etwa zylindrischen Regelkörpers 20 erstreckende Ausnehmung ausgeformt.

Die Abtriebsachse 22 ist an ihrem einen axialen Ende in einer Aufnahmeöffnung 26 an einem das Strömungsgehäuse 10 verschließenden Boden 28 gelagert und an ihrem entgegengesetzten axialen Ende in einer Aufnahme 29 an einem Boden 30 eines Spalttopfes 32.

Der Antrieb des Regelkörpers 20 erfolgt über einen Antriebsmotor 34, der als zweiphasiger Klauenpolmotor ausgeführt ist, wobei jede Phase vier Polpaare aufweist. Durch eine entsprechende Kommutierung, welche phasenversetzt für zwei Spulen 36 eines Stators 38 des Klauenpolmotors stattfindet, kann ein Rotor 40 gleichmäßig angetrieben und auf beliebige Drehpositionen verstellt werden.

Der Rotor 40 ist vom Stator 38 durch den Spalttopf 32 getrennt, welcher einstückig mit einem Aktorgehäuse 42 ausgebildet ist, indem sich ein Kragen 43 radial nach außen vom Spalttopf 32 zum umliegenden Aktorgehäuse 42 erstreckt, der axial den Stator 38 begrenzt. Das Aktorgehäuse 42 umgibt den Antriebsmotor 34 radial und ist am Strömungsgehäuse 10 mittels Schrauben 45 befestigt, so dass im radial Inneren des Strömungsgehäuses 10 zwischen dem Antriebsmotor 34 und dem Regelkörper 20 ein Innenraum 44 geschaffen wird, der axial durch den Spalttopf 32 und dessen Kragen 43 und radial durch das Aktorgehäuse 42 und das Strömungsgehäuse 10 begrenzt wird und an der axial gegenüberliegenden Seite durch den Boden 28 des Strömungsgehäuses 10 begrenzt wird, so dass dieser Innenraum 44 mit dem durch den Regelkörper 20 geregelten Fluid gefüllt ist, während ein durch den Spalttopf abgetrennter Außenraum 47, in dem der Stator 38 angeordnet ist, trocken und gegen äußere Einflüsse geschützt ist. Des Weiteren ist axial zwischen dem Kragen 43 des Spalttopfes 32 und dem Regelkörper 20 im Innenraum 44 ein Wolfromgetriebe 46 angeordnet, mittels dessen die Bewegung des Antriebsmotors 34 mit einer hohen Übersetzung auf den Regelkörper 20 übertragen wird.

Das Wolfromgetriebe 46 besteht aus einem Sonnenrad 48, welches auf der Abtriebsachse 22 befestigt ist und einteilig mit einem Rotorträger 52 ausgebildet ist, an dessen zum Sonnenrad 48 entgegengesetzten Ende am Außenumfang die Magneten des Rotors 40 befestigt sind. Das Sonnenrad 48 kämmt mit zwei Planetenrädern 50, die schwimmend gelagert sind. Die Planetenräder 50 greifen mit einem ersten axialen Abschnitt in ein erstes, feststehendes Hohlrad 56, welches an der Innenseite des Aktorgehäuses 42 befestigt ist. Ein zweiter axialer Abschnitt der Planetenräder 50 greift in ein zweites Hohlrad 60, welches an der radialen Innenseite eines ringförmigen Vorsprungs am Regelkörper 20 ausgebildet ist und entsprechend mit dem Regelkörper 20 gedreht wird. Das erste Hohlrad 56 unterscheidet sich vom zweiten Hohlrad 60 lediglich um ein bis zwei Zähne, wodurch bei Drehung des Antriebsmotors 34 eine sehr hohe Übersetzung entsteht und der Regelkörper 20 sehr genau eingestellt werden kann.

Wird der Stator 38 des Antriebsmotors 34 entsprechend bestromt, wird das entstehende magnetische Feld durch den Spalttopf 32 auf den Rotor 40 übertragen, der entsprechend mit dem Sonnenrad 48 auf der Abtriebsachse 22 gedreht wird. Durch die Drehung des Sonnenrades 48 rollen die Planetenräder 50 auf dem Sonnenrad 48 und dem feststehenden ersten Hohlrad 56 ab und übertragen durch die Zähneanzahldifferenz die Bewegung mit sehr hoher Übersetzung auf das zweite Hohlrad 60 und damit auch auf den Regelkörper 20, welcher somit zum Öffnen und Schließen einer Verbindung zwischen dem Einlass 12 und dem Auslass 14 gedreht wird.

Der Innenraum 44, in dem sich das Wolfromgetriebe 46, der Rotor 40 und der Regelkörper 20 befinden, ist mit dem zu förderndem Fluid gefüllt. Dies bedeutet, dass alle sich drehenden Teile in diesem Innenraum 44 angeordnet sind, so dass keine Dichtung entlang der sich drehenden Teile vorgenommen werden muss. Es ist lediglich das Strömungsgehäuse 10 nach außen zum Aktorgehäuse 42 abgedichtet, welche jedoch beide still stehen, so dass eine statische Dichtung verwendet werden kann. Auf dynamische Dichtungen kann entsprechend vollständig verzichtet werden.

Um jedoch die Regelung des Regelkörpers 20 sehr genau und feinfühlig vollziehen zu können, ist radial innerhalb des Rotors 40 angrenzend zur Aufnahme 29 für das Ende der Abtriebsachse 22 am Spalttopf ein als Permanentmagnet ausgeführter Gebermagnet 62 an der Abtriebsachse 22 angeordnet. Der Gebermagnet 62 ist auf einem Magnetträger 64 befestigt, der gegenüberliegend zum Rotorträger 52 an der Abtriebsachse 22 befestigt ist, so dass der Gebermagnet 62 axial auf dem Magnetträger 64 aufliegt.

Der Gebermagnet 62 besteht aus zwei axial übereinander angeordneten diametral magnetisierten Magnetringen 63, 65, bei denen der jeweilige Nordpol des ersten Magnetringes 63 dem Südpol des zweiten Magnetringes 65 axial gegenüberliegt.

Auf der zur Aufnahme 29 des Spalttopfes 32 gegenüberliegenden Seite des Spalttopfes 32 ist auf der Mittelachse des Antriebsmotors 34 ein Magnetsensor 66, wie beispielsweise ein Hall-Sensor angeordnet, in dem das sich drehende magnetische Feld des Permanentmagneten 62 in bekannter Weise in eine Spannung umgewandelt wird, welche ein Maß für die Drehposition der Abtriebsachse 22 und damit auch des Regelkörpers 20 darstellt. Der Sensor 66 ist auf einer Platine 68 angeordnet, die im Außenraum 47 befestigt ist, der durch einen Deckel 70 verschlossen wird und im Übrigen durch das Aktorgehäuse 42 und den Spalttopf 32 begrenzt wird. Von dieser durch den Deckel 70 verschließbaren Seite kann die Platine 68 mit dem Sensor 66 in diesem Außenraum 47 befestigt werden. Die Platine 68 trägt neben dem Sensor 66 auch eine Steuerelektronik sowie die Leistungsbausteine zur Ansteuerung des Antriebsmotors 34, so dass der ebenfalls im Außenraum 47 angeordnete Stator 38 direkt an die Platine 68 angeschlossen und entsprechend zu den Daten des Sensors 66 angesteuert werden kann, um eine definierte Position anzufahren.

Durch die Ausführung des Antriebsmotors 34 als zweiphasiger Klauenpolmotor mit vier Polpaaren je Phase entsteht auf der Mittelachse des Antriebsmotors 34, auf der auch der Sensor 66 angeordnet ist, durch die Bestromung des Stators und die Drehung des Rotors kein magnetisches Feld, da sich dieses auf der Drehachse immer exakt aufhebt. Hierdurch wirkt auf den Sensor 66 weitestgehend störungsfrei lediglich das magnetische Feld des Permanentmagneten 62, dessen Drehposition immer exakt der Drehposition des Regelkörpers 20 entspricht, da der Regelkörper 20 fest zur Abtriebsachse 22 und der Gebermagnet 62 ebenfalls fest zur Abtriebsachse 22 angeordnet ist. Daraus folgt, dass die im Sensor 66 erzeugte Spannung immer genau einer exakten Position des Regelkörpers 20 entspricht, so dass dieser sehr genau und aufgrund der hohen Übersetzung des Wolfromgetriebes sehr feinfühlig verstellt werden kann. Die gesamte Elektronik kann im vom Regelkörper 20 abgewandten Bereich platziert werden und dennoch die genaue Position des Regelkörpers 20 detektiert werden, indem die Abtriebsachse durch den gesamten Antrieb geführt wird.

Es sollte deutlich sein, dass verschiedene Modifikationen im Vergleich zum beschriebenen Ausführungsbeispiel für den Fachmann naheliegen, ohne den Schutzbereich des Hauptanspruchs zu verlassen. So können Einlass und Auslass auch gegenüberliegend oder andersartig zueinander angeordnet werden oder mehrere Ein- und Auslässe ausgebildet werden, so dass die Durchströmungsöffnung oder -öffnungen entsprechend im Drehschieberglied anders platziert werden. Auch kann eine Klappe als Regelkörper genutzt werden. Selbstverständlich kann auch die Bauform des Wolfromgetriebes geändert werden. Denkbar ist auch eine mehrteilige Ausführung des Drehschiebergliedes mit dem zweiten Hohlrad oder eine Verwendung eines Planetenträgers im Getriebe. Auch könnte der Gebermagnet direkt an der Welle befestigt sein. Weitere konstruktive Änderungen sind selbstverständlich ebenfalls denkbar.

## Patentansprüche

1. Ventilvorrichtung für ein Kraftfahrzeug mit
einem Strömungsgehäuse (10), welches zumindest einen Einlass (12) und zumindest einen Auslass (14) aufweist,
einem Antriebsmotor (34) mit einem Stator (38) und einem Rotor (40), einem Getriebe (46), welches mittels des Antriebsmotors (34) in Drehung versetzbar ist und über welches ein Regelkörper (20) mit einer Antriebswelle oder Antriebsachse (22) drehbar ist, auf der der Regelkörper (20) zumindest drehfest angeordnet und über die der Regelkörper (20) gelagert ist, über welchen eine fluidische Verbindung zwischen dem zumindest einen Einlass (12) und dem zumindest einen Auslass (14) regelbar ist,
**dadurch gekennzeichnet, dass**
die Abtriebswelle oder Abtriebsachse (22) sich vom Regelkörper (20) durch das Getriebe (46) zumindest in den Rotor (40) des Antriebsmotors (34) erstreckt, wobei ein Gebermagnet (62) als Sensorgeber zumindest drehfest zur Abtriebswelle oder Abtriebsachse (22) befestigt ist, der mit einem Magnetsensor (66) zur Positionserfassung kommuniziert, wobei der Rotor (40) vom Stator (38) durch einen Spalttopf (32) getrennt ist, der einen Innenraum (44), in dem der Gebermagnet (62) angeordnet ist, von einem Außenraum (47), in dem der Sensor (66) angeordnet ist, trennt.

2. Ventilvorrichtung für ein Kraftfahrzeug nach Anspruch 1,
**dadurch gekennzeichnet, dass**
der Magnetsensor (66) auf der Mittelachse des Antriebsmotors (34) angeordnet ist.

3. Ventilvorrichtung für ein Kraftfahrzeug nach Anspruch 1 oder 2,
**dadurch gekennzeichnet, dass**
die Abtriebswelle oder Abtriebsachse (22) an einem Boden (30) des Spalttopfes (32) in einer zentralen Aufnahme (29) gelagert ist, wobei der Magnetsensor (66) auf einer zur Aufnahme (29) gegenüberliegenden Seite des Spalttopfes (32) angeordnet ist.

4. Ventilvorrichtung für ein Kraftfahrzeug nach einem der vorhergehenden Ansprüche,
**dadurch gekennzeichnet, dass**
der Gebermagnet (62) auf der dem Magnetsensor (66) zugewandten Seite eine ungerade Polpaarzahl aufweist und der Antriebsmotor (34) eine gerade magnetische Polpaarzahl aufweist.

5. Ventilvorrichtung für ein Kraftfahrzeug nach einem der vorhergehenden Ansprüche,
**dadurch gekennzeichnet, dass**
der Antriebsmotor (34) als zweiphasiger Klauenpolmotor ausgeführt ist.

6. Ventilvorrichtung für ein Kraftfahrzeug nach einem der vorhergehenden Ansprüche,
**dadurch gekennzeichnet, dass**
der Gebermagnet (62) ein axial sektorförmig magnetisierter Ringmagnet ist.

7. Ventilvorrichtung für ein Kraftfahrzeug nach einem der vorhergehenden Ansprüche,
**dadurch gekennzeichnet, dass**
der Gebermagnet (62) an einem Magnetträger (64) befestigt ist, der an der Abtriebswelle oder Abtriebsachse (22) befestigt ist.

8. Ventilvorrichtung für ein Kraftfahrzeug nach einem der vorhergehenden Ansprüche,
**dadurch gekennzeichnet, dass**
der Magnetsensor (66) auf einer Platine (68) im Außenraum (47) des Spalttopfes (32) angeordnet ist, auf welcher die Steuerelektronik angeordnet ist, wobei der Außenraum (47) durch einen Deckel (70) am axialen, zum Regelkörper (20) gegenüberliegenden Ende der Ventilvorrichtung verschlossen ist.

9. Ventilvorrichtung für ein Kraftfahrzeug nach einem der vorhergehenden Ansprüche,
**dadurch gekennzeichnet, dass**
der Rotor (40) des Antriebsmotors (34) hohlzylindrisch ausgebildet ist und über einen Rotorträger (52) auf der Abtriebsachse (22) gelagert ist, wobei im Innern des Rotors (40) der Gebermagnet (62) zur Lagerückmeldung angeordnet ist.

10. Ventilvorrichtung für ein Kraftfahrzeug nach einem der vorhergehenden Ansprüche,
**dadurch gekennzeichnet, dass**
der Spalttopf (32) einstückig mit einem Aktorgehäuse (42) ausgebildet ist.

11. Ventilvorrichtung für ein Kraftfahrzeug nach Anspruch 9 oder 10,
**dadurch gekennzeichnet, dass**
das Getriebe (46) ein Wolfromgetriebe ist, dessen Sonnenrad (48) einstückig mit dem Rotorträger (52) ausgebildet ist.

12. Ventilvorrichtung für ein Kraftfahrzeug nach Anspruch 11,
**dadurch gekennzeichnet, dass**
der Spalttopf (32) einen sich radial erstreckenden Kragen (43) aufweist, der den Innenraum (44), in dem der Rotor (40) und das Wolfromgetriebe (46) angeordnet sind, axial vom Außenraum (47) trennt.

13. Ventilvorrichtung für ein Kraftfahrzeug nach Anspruch 12,
**dadurch gekennzeichnet, dass**
sich vom Kragen (43) des Spalttopfes (32) axial ein erstes Hohlrad (56) des Wolfromgetriebes (46) erstreckt.

14. Ventilvorrichtung für ein Kraftfahrzeug nach einem der Ansprüche 11 bis 13,
**dadurch gekennzeichnet, dass**
ein zweites Hohlrad (60) des Wolfromgetriebes (46) drehfest zum Regelkörper (20) ausgebildet ist.

15. Ventilvorrichtung für ein Kraftfahrzeug nach Anspruch 14,
**dadurch gekennzeichnet, dass**
das Sonnenrad (48) des Wolfromgetriebes (46) mit zumindest einem Planetenrad (50) kämmt, das mit dem ersten Hohlrad (56) und dem zweiten Hohlrad (60) kämmt, wobei die Zähneanzahl der beiden Hohlräder (56, 60) unterschiedlich sind.

16. Ventilvorrichtung für ein Kraftfahrzeug nach einem der vorhergehenden Ansprüche,
**dadurch gekennzeichnet, dass**
die Ventilvorrichtung ein Drehschieberventil für einen Kühlmittelkreislauf ist und der Regelkörper (20) ein Drehschieberglied ist.

## Claims

1. Valve device for a motor vehicle comprising
a flow housing (10) comprising at least one inlet (12) and at least one outlet (14),
a drive motor (34) with a stator (38) and a rotor (40),
a transmission (46), which can be made to rotate by means of the drive motor (34) and via which a control body (20) with a drive shaft or drive axle (22) can be rotated, on which the control body (20) is arranged at least in a rotationally fixed manner and via which the control body (20) is beared, via which a fluidic connection between the at least one inlet (12) and the at least one outlet (14) can be controlled,
**characterised in that**
the drive shaft or drive axle (22) extends from the control body (20) through the transmission (46) at least into the rotor (40) of the drive motor (34), wherein an encoder magnet (62) is attached at least non-rotatably to the drive shaft or drive axle (22) as a transmitter, which communicates with a magnetic sensor (66) for position detection, wherein the rotor (40) is separated from the stator (38) by a separating can (32), which separates an inner space (44), in which the encoder magnet (62) is arranged, from an outer space (47), in which the sensor (66) is arranged.

2. Valve device for a motor vehicle according to claim 1,
**characterised in that**
the magnetic sensor (66) is arranged on the centre axis of the drive motor (34).

3. Valve device for a motor vehicle according to claim 1 or 2,
**characterised in that**
the drive shaft or drive axle (22) is beared at a base (30) of the separating can (32) in a central receptacle (29), wherein the magnetic sensor (66) is arranged on a side of the separating can (32) opposite the receptacle (29).

4. Valve device for a motor vehicle according to one of the preceding claims, **characterised in that**
the encoder magnet (62) comprises an odd number of pole pairs on the side facing the magnetic sensor (66) and the drive motor (34) comprises an even number of magnetic pole pairs.

5. Valve device for a motor vehicle according to one of the preceding claims, **characterised in that**
the drive motor (34) is configured as a two-phase claw pole motor.

6. Valve device for a motor vehicle according to one of the preceding claims, **characterised in that**
the encoder magnet (62) is an axially sector-shaped magnetised ring magnet.

7. Valve device for a motor vehicle according to one of the preceding claims, **characterised in that**
the encoder magnet (62) is attached to a magnet carrier (64), which is attached to the drive shaft or drive axle (22).

8. Valve device for a motor vehicle according to one of the preceding claims, **characterised in that**
the magnetic sensor (66) is arranged on a circuit board (68) in the outer space (47) of the separating can (32), on which the control electronics are arranged, wherein the outer space (47) is closed by a cover (70) at the axial end of the valve device opposite the control body (20).

9. Valve device for a motor vehicle according to one of the preceding claims, **characterised in that**
the rotor (40) of the drive motor (34) is configured as a hollow cylinder and is beared on the drive axle (22) via a rotor carrier (52), wherein the encoder magnet (62) is arranged in the interior of the rotor (40) for position feedback.

10. Valve device for a motor vehicle according to one of the preceding claims,
**characterised in that**
the separating can (32) is configured in one piece with an actuator housing (42).

11. Valve device for a motor vehicle according to claim 9 or 10,
**characterised in that**
the transmission (46) is a Wolfrom transmission, the sun gear (48) of which is configured in one piece with the rotor carrier (52).

12. Valve device for a motor vehicle according to claim 11,
**characterised in that**
the separating can (32) comprises a radially extending collar (43) which axially separates the inner space (44), in which the rotor (40) and the Wolfrom gear (46) are arranged, from the outer space (47).

13. Valve device for a motor vehicle according to claim 12,
**characterised in that**
a first ring gear (56) of the Wolfrom gear (46) extends axially from the collar (43) of the separating can (32).

14. Valve device for a motor vehicle according to one of claims 11 to 13, **characterised in that**
a second ring gear (60) of the Wolfrom gear (46) is configured to be non-rotatable relative to the control body (20).

15. Valve device for a motor vehicle according to claim 14,
**characterised in that**
the sun gear (48) of the Wolfrom gear (46) meshes with at least one planet gear (50) which meshes with the first ring gear (56) and the second ring gear (60), wherein the number of teeth of the two ring gears (56, 60) are different.

16. Valve device for a motor vehicle according to one of the preceding claims,
**characterised in that**
the valve device is a rotary slide valve for a coolant circuit and the control body (20) is a rotary slide valve member.

## Revendications

1. Dispositif de vanne pour un véhicule automobile avec un boîtier fluidique (10) qui comprend au moins une entrée (12) et au moins une sortie (14),
un moteur d'entraînement (34) avec un stator (38) et un rotor (40),
une transmission (46) qui peut être mise en rotation au moyen du moteur d'entraînement (34) et par laquelle un corps de régulation (20) peut tourner avec un arbre d'entraînement ou un axe d'entraînement (22), sur lequel le corps de régulation (20) est disposé au moins sans pouvoir tourner et par lequel le corps de régulation (20) est supporté, par lequel une connexion fluidique entre la au moins une entrée (12) et la au moins une sortie (14) peut être régulée,
**caractérisé en ce que**
l'arbre de sortie ou l'axe de sortie (22) s'étend de corps de régulation (20) à travers la transmission (46) au moins dans le rotor (40) du moteur d'entraînement (34), un aimant de transmetteur (62) étant fixé comme transmetteur de capteur au moins solidairement en rotation par rapport à l'arbre de sortie ou à l'axe de sortie (22), lequel communique avec un capteur magnétique (66) pour la détection de position, le rotor (40) est séparé du stator (38) par un pot de séparation (32) qui sépare un espace intérieur (44), dans lequel est disposé l'aimant de capteur (62), d'un espace extérieur (47), dans lequel est disposé le capteur (66).

2. Dispositif de vanne pour un véhicule automobile selon la revendication 1,
**caractérisé en ce que**
le capteur magnétique (66) est disposé sur l'axe central du moteur d'entraînement (34).

3. Dispositif de vanne pour un véhicule automobile selon la revendication 1 ou 2,
**caractérisé en ce que**
l'arbre de sortie ou axe de sortie (22) est supporté sur un fond (30) du pot de séparation (32) dans un logement central (29), le capteur magnétique (66) étant disposé sur un côté du pot de séparation (32) opposé au logement (29).

4. Dispositif de vanne pour un véhicule automobile selon l'une des revendications précédentes,
**caractérisé en ce que**
l'aimant de capteur (62) comprend un nombre impair de paires de pôles sur le côté tourné vers le capteur magnétique (66) et le moteur d'entraînement (34) comprend un nombre pair de paires de pôles magnétiques.

5. Dispositif de vanne pour un véhicule automobile selon l'une des revendications précédentes,
**caractérisé en ce que**
le moteur d'entraînement (34) est conçu comme un moteur à pôles à griffes biphasé.

6. Dispositif de vanne pour un véhicule automobile selon l'une des revendications précédentes,
**caractérisé en ce que**
l'aimant de capteur (62) est un aimant annulaire à magnétisation sectorielle axiale.

7. Dispositif de vanne pour un véhicule automobile selon l'une des revendications précédentes,
**caractérisé en ce que**
l'aimant de capteur (62) est fixé à un support magnétique (64) fixé à l'arbre de sortie ou axe de sortie (22).

8. Dispositif de vanne pour un véhicule automobile selon l'une des revendications précédentes,
**caractérisé en ce que**
le capteur magnétique (66) est disposé sur une platine (68) dans l'espace extérieur (47) du pot de séparation (32), sur laquelle est disposée l'électronique de commande, l'espace extérieur (47) étant fermé par un couvercle (70) à l'extrémité axiale du dispositif de vanne opposée au corps de régulation (20).

9. Dispositif de vanne pour un véhicule automobile selon l'une des revendications précédentes,
**caractérisé en ce que**
le rotor (40) du moteur d'entraînement (34) est de forme cylindrique creuse et est supporté sur l'axe de sortie (22) par l'intermédiaire d'un support de rotor (52), l'aimant de capteur (62) étant disposé à l'intérieur du rotor (40) pour la signalisation de position.

10. Dispositif de vanne pour un véhicule automobile selon l'une des revendications précédentes,
**caractérisé en ce que**
le pot de séparation (32) est formé d'une seule pièce avec un boîtier d'actionneur (42).

11. Dispositif de vanne pour un véhicule automobile selon la revendication 9 ou 10,
**caractérisé en ce que**
la transmission (46) est une transmission Wolfrom dont le pignon solaire (48) est formé d'une seule pièce avec le support de rotor (52).

12. Dispositif de vanne pour un véhicule automobile selon la revendication 11,
**caractérisé en ce que**
le pot de séparation (32) comprend un collier (43) s'étendant radialement et séparant axialement l'espace intérieur (44), dans lequel sont disposés le rotor (40) et la transmission Wolfrom (46), de l'espace extérieur (47).

13. Dispositif de vanne pour un véhicule automobile selon la revendication 12,
**caractérisé en ce que**
une première couronne (56) de la transmission Wolfrom (46) s'étend axialement du collier (43) du pot de séparation (32).

14. Dispositif de vanne pour un véhicule automobile selon l'une des revendications 11 à 13,
**caractérisé en ce que**
une deuxième couronne (60) de la transmission Wolfrom (46) est solidaire en rotation du corps de régulation (20).

15. Dispositif de vanne pour un véhicule automobile selon la revendication 14,
**caractérisé en ce que**
la roue solaire (48) de l'engrenage à transmission Wolfrom (46) s'engrène avec au moins une roue planétaire (50) qui s'engrène avec la première couronne (56) et la deuxième couronne (60), le nombre de dents des deux couronnes (56, 60) étant différent.

16. Dispositif de vanne pour un véhicule automobile selon l'une des revendications précédentes,
**caractérisé en ce que**
le dispositif de vanne est une vanne rotative pour un circuit de liquide de refroidissement et le corps de régulation (20) est un organe de vanne rotatif.
